# EUROPÄISCHE PATENTANMELDUNG

(11) **EP 3 324 385 A1**
(43) Veröffentlichungstag der Anmeldung: **23.05.2018**
(21) Anmeldenummer: 17198386.9
(22) Anmeldetag: 25.10.2017
(51) Int. Cl.: G08G 1/16, G08G 1/0967, G08G 1/017

(54) **VERFAHREN ZUR KOMMUNIKATION ZWISCHEN EINER BEDIENSTELLE, WELCHE EIN AUTOMATISCH FAHRENDES FAHRZEUG EXTERN STEUERT, UND EINEM WEITEREN VERKEHRSTEILNEHMER SOWIE AUTOMATISCH FAHRENDES FAHRZEUG**

(30) Priorität: 02.11.2016 DE 102016221480
(71) Anmelder: VOLKSWAGEN AKTIENGESELLSCHAFT, 38440 Wolfsburg (DE)
(72) Erfinder: Buburuzan, Dr. Teodor, 38118 Braunschweig (DE); Rech, Dr. Bernd, 38556 Bokensdorf (DE); Lehmann, Bernd, 38444 Wolfsburg (DE); Engel, Monique, 38110 Braunschweig (DE); Kleinau, Sandra, 38531 Rötgesbüttel (DE); Gläser, Dr. Stefan, 38104 Braunschweig (DE); Günther, Hendrik-Jörn, 30173 Hannover (DE); Hartog, Johannes, 38102 Braunschweig (DE)

(57) **Zusammenfassung**

Bereitgestellt wird ein Verfahren zur Kommunikation zwischen einer Bedienstelle, welche ein automatisch fahrendes Fahrzeug extern steuert, und einem weiteren Verkehrsteilnehmer. Das Verfahren beinhaltet ein Identifizieren des weiteren Verkehrsteilnehmers sowie ein Aufbauen einer Kommunikationsverbindung zwischen der Bedienstelle und dem weiteren Verkehrsteilnehmer.

## Beschreibung

Die vorliegende Erfindung betrifft die Kommunikation von automatisch fahrenden Fahrzeugen mit sonstigen Verkehrsteilnehmern. Insbesondere betrifft die vorliegende Erfindung ein Verfahren zur Kommunikation zwischen einer Bedienstelle, welche ein automatisch fahrendes Fahrzeug extern steuert, und einem weiteren Verkehrsteilnehmer sowie ein automatisch fahrendes Fahrzeug umfassend eine Kommunikationsvorrichtung.

Ein Fahrzeug ist ein mobiles Verkehrsmittel für den Transport von Personen oder Gütern. Bei dem Fahrzeug kann es sich daher sowohl um ein Personen- als auch um ein Nutzfahrzeug handeln. Zum Beispiel kann ein Fahrzeug ein Personenkraftwagen, ein Lastkraftwagen, ein Motorrad oder ein Traktor sein. Allgemein kann ein Fahrzeug als eine Vorrichtung aufgefasst werden, die einen Motor, ein Antriebsstrangsystem sowie Räder umfasst.

Ein automatisch fahrendes Fahrzeug bewegt sich vollständig automatisch im öffentlichen Straßenverkehr. Dazu kann ein automatisch fahrendes Fahrzeug mit bordeigener Sensorik zur Erkennung seines Umfeldes ausgestattet sein (z.B. Kameras, Laserscanner, Radar) und die Möglichkeit besitzen, mit anderen Verkehrsteilnehmern oder auch Infrastruktur (z.B. Back-End, straßenseitige Infrastruktur wie Ampeln) zu kommunizieren. Ein automatisch fahrendes Fahrzeug trifft Entscheidungen zu seinem operativen und taktischen Fahren auf Basis der erhaltenen Informationen selbst und kann in seinem Nahbereich auch mit anderen Verkehrsteilnehmern kooperieren.

Ab einem gewissen Automatisierungsgrad (z. B. ab Society of Automotive Engineers, SAE, Level 4) wird mindestens ein Teil der Fahrzeuge ohne einen menschlichen Fahrer auf öffentlichen Straßen unterwegs sein. Solche automatisch gesteuerten L4-Fahrzeuge werden dann in einem sogenannten Mischverkehr agieren müssen, in dem sie mit anderen Fahrzeugen mit gleichem oder höherem Automatisierungsgrad (z.B. SAE-Level 5) bzw. mit Fahrzeugen mit niedrigerem Automatisierungsgrad oder ohne Automatisierung (in einigen oder allen Situationen von menschlichem Fahrer gelenkt) interagieren müssen. Weiterhin können auch Situationen vorkommen, in denen eine Interaktion mit Fußgängern nötig ist.

Obwohl L4-Fahrzeuge die meisten Verkehrssituationen ohne menschliche Intervention bewerkstelligen können, sind Situationen denkbar, in denen ein L4-Fahrzeug an seine Systemgrenzen stößt. Es könnte beispielsweise vorkommen, dass es alleine auf Basis seines eigenen Wissens den Verkehr nicht einschätzen kann (z.B. weil Informationen fehlen), oder die Planung einer (zu fahrenden) Trajektorie bzw. eines Manöver nicht möglich ist (L4-Fahrzeug befindet sich in einem Deadlock).

Eine solche Verklemmung kann durch ein Command Center aufgelöst werden. Ein Command Center ist eine Einrichtung, in der eine speziell ausgebildete Person oder ein System mit spezifischen Fähigkeiten und Informationen temporär die Steuerung eines automatisch fahrenden Fahrzeuges übernehmen kann. Das Command Center kann das verklemmte Fahrzeug mit Informationen versorgen, mit deren Hilfe das Fahrzeug seine Verklemmung autonom auflösen kann. Dabei kann es sich beispielsweise um Informationen über befahrbare Bereiche handeln, die das automatisch fahrende Fahrzeug selbst nicht erkannt hat. Alternativ kann das Command Center dem Fahrzeug auch Trajektorien übermitteln, welche das Fahrzeug nicht mit eigenen Algorithmen berechnen konnte. Ist die Situation komplexer, so kann die Steuerung des Fahrzeugs komplett von einem Remote-Fahrer des Command Centers übernommen werden.

Auch wenn ein Remote-Fahrer ein L4-Fahrzeug von einem Command Center aus steuern kann, sind Situationen vorstellbar, in denen der Remote-Fahrer ein Problem nicht alleine lösen kann. Es könnte sich beispielsweise um komplexe Situationen handeln, in denen auch andere Fahrzeuge involviert sind und in denen eine Kooperation und/oder Koordinierung aller Fahrzeuge nötig ist. In solch einer Situation könnte das Command Center z. B. nicht genügend Informationen zum Auflösen der Situation besitzen, weil das L4-Fahrzeug nicht genügend Informationen bereitstellen kann (z. B. Grenzen der Sensorwahrnehmung). Es könnte auch ein koordinierter Ablauf der Manöver verschiedener Verkehrsteilnehmer notwendig sein.

In der Druckschrift US 2015/0370355 A1 wird dazu z.B. vorgeschlagen, dass innerhalb eines festgelegten Kontrollbereichs eine Bereichsautorität Nachrichten an automatisch fahrende Fahrzeuge bzw. Fahrzeuge ohne Automatisierung sendet, um die Fahrzeuge in dem Kontrollbereich zu steuern bzw. die Einhaltung vorgegebener Regeln im Kontrollbereich sicherzustellen. Jedoch ist der Druckschrift US 2015/0370355 A1 keine Lösung zu entnehmen, um komplexe Situationen zwischen einem automatisch fahrenden Fahrzeug und einem weiteren Verkehrsteilnehmer aufzulösen.

Druckschrift US 2015/0158499 A1 schlägt ein Fahrzeugüberwachungssystem vor. Dabei werden von einem oder mehreren Fahrzeugen Informationen gesammelt. Falls festgestellt wird, dass eines der Fahrzeuge potenziell gefährdet ist, wird in diesem Fahrzeug ein Alarm ausgelöst. Auch der Druckschrift US 2015/0158499 A1 ist jedoch keine Lösung zu entnehmen, um komplexe Situationen zwischen einem automatisch fahrenden Fahrzeug und einem weiteren Verkehrsteilnehmer aufzulösen.

In Druckschrift DE 10 2013 226 336 A1 wird ein Verfahren zur Kommunikation zwischen automatisch fahrenden Fahrzeugen und Menschen vorgeschlagen. Dabei detektiert ein Fahrzeug einen Verkehrsteilnehmer aus aufgenommenen Umfelddaten. Falls ein Kommunikationsbedarf mit dem Verkehrsteilnehmer besteht, wird eine Ausgabe an den Verkehrsteilnehmer veranlasst. Das in Druckschrift DE 10 2013 226 336 A1 vorgeschlagene Verfahren ist jedoch nur anwendbar, solange das automatisch fahrende Fahrzeug selbst eine Situation auflösen kann. Daher ist auch der Druckschrift DE 10 2013 226 336 A1 keine Lösung zu entnehmen, um komplexe Situationen zwischen einem automatisch fahrenden Fahrzeug und einem sonstigen Verkehrsteilnehmer aufzulösen, in denen ein externer Remote-Fahrer involviert ist.

Es besteht somit ein Erfordernis, eine Möglichkeit bereitzustellen, um einer Bedienstelle, welche ein automatisch fahrendes Fahrzeug extern steuert, die Auflösung komplexer Situationen zu ermöglichen.

Die vorliegende Erfindung ermöglicht dies durch ein Verfahren zur Kommunikation zwischen einer Bedienstelle, welche ein automatisch fahrendes Fahrzeug extern steuert, und einem weiteren Verkehrsteilnehmer. Die Bedienstelle (engl. command center) ist eine Stelle, in welcher ein Remote-Fahrer das automatisch fahrende Fahrzeug extern steuern (d.h. fernsteuern) kann. Die Bedienstelle kann beispielsweise von einem Hersteller des Fahrzeugs oder einem Mobilitätsdienstleister (z.B. Fahrzeugverleiher) betrieben werden bzw. unter dessen Verantwortung stehen. Die Bedienstelle kann dazu so ausgeführt sein, dass der Remote-Fahrer auf Funktionen des automatisch fahrenden Fahrzeugs (z.B. Beschleunigen, Bremsen, Lenken, Lichtanlage etc.) zugreifen und diese bedienen kann. Ferner kann die Bedienstelle so ausgeführt sein, dass der Remote-Fahrer auf gemessene bzw. berechnete Parameter des Fahrzeugs zugreifen kann. Beispielsweise kann der externe Zugriff auf das Fahrzeug durch einen Fahrzeuginsassen genehmigt werden. Dies kann z.B. dadurch geschehen, dass der Fahrzeuginsasse Hilfe suchend selbst darum gebeten hat oder die Bedienstelle dem Fahrzeuginsassen die Übernahme der Steuerung vorschlägt, was dann durch den Fahrzeuginsassen bestätigt wird. So kann dem Remote-Fahrer z.B. Zugriff auf Aufnahmen einer oder mehrerer Kameras des automatisch fahrenden Fahrzeugs oder auf Messwerte eines oder mehrerer sonstiger Sensoren (z.B. Geschwindigkeit, Abstand) des automatisch fahrenden Fahrzeugs ermöglicht werden. Auch kann die Freigabe zu Datenbereichen dediziert durch einen Fahrzeuginsassen bestätigt werden müssen. Auf diese Weise obliegt es dem Fahrzeuginsassen, welche Informationen er der Bedienstelle zugänglich machen möchte. Dazu kann die Bedienstelle beispielsweise eine Datenverbindung zu dem automatisch fahrenden Fahrzeug unterhalten (z.B. über ein zellulares Netzwerk).

Das Verfahren umfasst ein Identifizieren des weiteren Verkehrsteilnehmers. Für die Ermittlung der Identität des weiteren Verkehrsteilnehmers kann auf eine Vielzahl unterschiedlicher Informationen zurückgegriffen werden. Neben Informationen, welche durch Sensorik des automatisch fahrenden Fahrzeugs gewonnen wurde, kann auch auf durch den weiteren Verkehrsteilnehmer bereitgestellte Informationen bzw. durch die Verkehrsinfrastruktur bereitgestellte Informationen zurückgegriffen werden. Bei dem weiteren Verkehrsteilnehmer kann es sich neben einem weiteren Fahrzeug (automatisch fahrend oder auch nicht) auch um Personen handeln.

Das Verfahren umfasst dabei ferner ein Aufbauen einer Kommunikationsverbindung zwischen der Bedienstelle und dem weiteren Verkehrsteilnehmer. Über die Kommunikationsverbindung kann ein Remote-Fahrer in der Bedienstelle mit dem weiteren Verkehrsteilnehmer in Kontakt treten und mit diesem Informationen austauschen. Auch dies kann ggf. nur nach Zustimmung eines der Fahrzeuginsassen (falls vorhanden) erfolgen. Der Kommunikationskanal kann sowohl die Übertragung von Sprache als auch die Übertragung sonstiger Informationen umfassen. Derart kann die Bedienstelle, welche das automatisch fahrende Fahrzeug extern steuert, komplexe Verkehrssituationen durch z.B. Abstimmung mit dem weiteren Verkehrsteilnehmer auflösen.

Gemäß einigen Ausführungsbeispielen der vorliegenden Erfindung beruht das Identifizieren des weiteren Verkehrsteilnehmers auf empfangenen Positionsinformationen des weiteren Verkehrsteilnehmers und/oder Messwerten eines Sensors des automatisch fahrenden Fahrzeugs und/oder von dem weiteren Verkehrsteilnehmer ausgesendeten Identifikationsinformationen. Ist z.B. auch der weitere Verkehrsteilnehmer bei der Bedienstelle registriert (z.B. weil er ein Fahrzeug desselben Herstellers oder Mobilitätsdienstleisters nutzt), können die Positionsinformationen des weiteren Verkehrsteilnehmers aufgrund einer z.B. kontinuierlichen Ortsbestimmung registrierter Teilnehmer bereits vorliegen, so dass auf diese zurückgegriffen werden kann für die Identifizierung. Alternativ oder ergänzend kann die Identifikation auch auf Messwerten eines Sensors des automatisch fahrenden Fahrzeugs beruhen. Beispielsweise kann mittels einer Kamera des automatisch fahrenden Fahrzeugs ein Nummernschild des weiteren Verkehrsteilnehmers aufgenommen werden und aus dem amtlichen Kennzeichen die Identität des weiteren Verkehrsteilnehmers bestimmt werden. Auch kann der weitere Verkehrsteilnehmer selbst Identifikationsinformationen aussenden. Ist der weitere Verkehrsteilnehmer z.B. bei der Bedienstelle registriert, kann er ein Pseudonym aussenden, welches die Bedienstelle einer Identität zuordnen kann. Die Identifizierung kann auch durch ITS (Intelligent Transport Systems) -Infrastruktur am Straßenrand erfolgen. Diese ITS-Infrastruktur kann beispielsweise zu einer Verkehrsmanagementzentrale gehören und dadurch über übergeordnete Informationen verfügen. Durch die Nutzung einer oder mehrerer der vorgenannten Informationen kann eine schnelle und zuverlässige Identifikation des weiteren Verkehrsteilnehmers ermöglicht werden.

In einigen Ausführungsbeispielen der vorliegenden Erfindung umfasst das Verfahren ferner ein Übertragen eines Messwerts eines Sensors des weiteren Verkehrsteilnehmers über die Kommunikationsverbindung an die Bedienstelle. Beispielsweise kann der weitere Verkehrsteilnehmer während seiner Kommunikation mit dem Remote-Fahrer der Bedienstelle diesem z. B. Videobilder oder andere Umfeldinformationen zur Verfügung stellen, damit der Remote-Fahrer die Situation besser beurteilt werden kann. Alternativ oder ergänzend zur Erfassung von Informationen mittels Fahrzeugsensorik des weiteren Verkehrsteilnehmers kann z.B. auch Sensorik eines mobilen Endgeräts des weiteren Verkehrsteilnehmers (z.B. Kamera eines Smartphones oder Tablet-Computers des weiteren Verkehrsteilnehmers) genutzt werden (sofern dieser beispielsweise die Erlaubnis dafür erteilt hat).

Gemäß einigen Ausführungsbeispielen der vorliegenden Erfindung umfasst das Verfahren ferner ein Übertragen von Informationen über eine geplante Fahrtrajektorie und/oder ein geplantes Fahrmanöver des automatisch fahrenden Fahrzeugs über die Kommunikationsverbindung an den weiteren Verkehrsteilnehmer. Dem weiteren Verkehrsteilnehmer können somit Informationen über das geplante Fahrverhalten des automatisch fahrenden Fahrzeugs mitgeteilt werden. Entsprechend kann der weitere Verkehrsteilnehmer sein weiteres Verhalten planen. Die geplanten Fahrtrajektorien bzw. Fahrmanöver können dadurch z.B. visuell auf einer Anzeige eines Fahrzeugs oder mobilen Endgeräts des weiteren Verkehrsteilnehmers angezeigt werden, so dass diesem weitere Informationen für die Auflösung der Verkehrssituation bereitgestellt werden können. Die Informationen über geplante Fahrtrajektorien bzw. Fahrmanöver des automatisch fahrenden Fahrzeugs können dem weiteren Verkehrsteilnehmer auch zusätzlich zu einer Sprachkommunikation mit dem Remote-Fahrer in der Bedienstelle übermittelt werden.

In einigen Ausführungsbeispielen der vorliegenden Erfindung ist der weitere Verkehrsteilnehmer ein zweites automatisch fahrendes Fahrzeug. Das Aufbauen der Kommunikationsverbindung zwischen der Bedienstelle und dem weiteren Verkehrsteilnehmer ist dabei ein Aufbauen einer Kommunikationsverbindung zwischen der Bedienstelle, welche das automatisch fahrende Fahrzeug extern steuert, und einer zweiten Bedienstelle, welche das zweite automatisch fahrende Fahrzeug extern steuert. Werden mehrere automatisch fahrende Fahrzeuge jeweils durch Remote-Fahrer einer Bedienstelle extern gesteuert, kann eine Koordinierung direkt zwischen den Remote-Fahrern stattfinden. Eine Auflösung einer komplexen Verkehrssituation kann durch die direkte Kommunikation zwischen den Bedienstellen bzw. den Remote-Fahrern vereinfacht werden. Die erste Bedienstelle kann dabei verschieden von der zweiten Bedienstelle sein, d.h. die beiden automatisch fahrenden Fahrzeugen werden von Remote-Fahrern unterschiedlicher Bedienstelle extern gesteuert. Jedoch kann die erste Bedienstelle auch mit der zweiten Bedienstelle identisch sein. Dies kann z.B. der Fall sein, wenn zwei Remote-Fahrer einer einzigen Bedienstelle die beiden automatisch fahrenden Fahrzeuge extern steuern.

Gemäß einigen Ausführungsbeispielen der vorliegenden Erfindung umfasst das Verfahren ferner ein Übertragen von Informationen über eine geplante Fahrtrajektorie und/oder ein geplantes Fahrmanöver des automatisch fahrenden Fahrzeugs über die Kommunikationsverbindung an die zweite Bedienstelle. Alternativ oder ergänzend umfasst das Verfahren ferner ein Übertragen von Informationen über eine geplante Fahrtrajektorie und/oder ein geplantes Fahrmanöver des zweiten automatisch fahrenden Fahrzeugs über die Kommunikationsverbindung an die (erste) Bedienstelle. Der jeweils anderen Bedienstelle (bzw. dem jeweiligen Remote-Fahrer) können derart Informationen über das geplante Fahrverhalten des automatisch fahrenden Fahrzeugs bzw. des zweiten automatisch fahrenden Fahrzeugs mitgeteilt werden. Entsprechend kann die jeweils andere Bedienstelle ihr weiteres Verhalten planen bzw. anpassen.

In einigen Ausführungsbeispielen der vorliegenden Erfindung erfolgt die Kommunikationsverbindung zwischen der Bedienstelle und dem weiteren Verkehrsteilnehmer über ein Mobilfunknetzwerk. Mobilfunknetzwerke (z.B. gemäß einem Standard des 3rd Generation Partnership Project, 3GPP) eignen sich aufgrund ihres hohen Grades an Verbreitung bzw. Verfügbarkeit für den Aufbau der Kommunikationsverbindung. Zudem können Mobilfunknetzwerke auch die nötige Bandbreite zur Datenübertragung für die Kommunikationsverbindung bereitstellen.

Gemäß einigen Ausführungsbeispielen der vorliegenden Erfindung umfasst die Kommunikationsverbindung zwischen der Bedienstelle und dem weiteren Verkehrsteilnehmer eine lokale Funkverbindung zwischen dem automatisch fahrenden Fahrzeug und dem weiteren Verkehrsteilnehmer. Beispielsweise können das automatisch fahrende Fahrzeug und der weitere Verkehrsteilnehmer über ein lokales drahtloses Netzwerk (engl. Wireless Local Area Network, WLAN; z.B. gemäß dem Standard 802.11 oder dem Standard 802.15.1 des Institute of Electrical and Electronics Engineers, IEEE) oder mittels Fahrzeug-zu-Fahrzeug-Kommunikation (Car-2-Car, C2C, Kommunikation z.B. gemäß dem Standard 802.11 p des IEEE). Derart kann die Kommunikationsverbindung zu dem weiteren Verkehrsteilnehmer auch aufgebaut werden, wenn dieser z.B. keinen Zugriff auf das Internet oder ein Mobilfunknetzwerk besitzt. Das automatisch fahrende Fahrzeug kann dabei wiederum z.B. mittels eines Mobilfunknetzwerks mit der Bedienstelle verbunden sein.

In einigen Ausführungsbeispielen der vorliegenden Erfindung wird die Identität des weiteren Verkehrsteilnehmers einem menschlichen Bediener (d.h. einem Remote-Fahrer), der das automatisch fahrende Fahrzeug in der Bedienstelle extern steuert, nicht mitgeteilt. Somit kann eine Identität des weiteren Verkehrsteilnehmers geschützt werden. Der weitere Verkehrsteilnehmer kann im Rahmen der Kommunikation mit der Bedienstelle selbst bestimmen, ob er dem menschlichen Bediener Informationen über seine Identität preisgeben möchte.

Es versteht sich von selbst, dass Ausführungsbeispiele der vorliegenden Erfindung auch ein Programm mit einem Programmcode zum Durchführen eines der hierin beschriebenen Verfahren umfasst, wenn der Programmcode auf einer Datenverarbeitungsanlage (z.B. einem Back-End, einer Computer-Cloud, einem Computer, einem Prozessor oder einer programmierbaren Hardwarekomponente) abläuft bzw. dort ausgeführt wird.

Gemäß einem weiteren Aspekt der vorliegenden Erfindung wird die Auflösung komplexer Situationen durch ein automatisch fahrendes Fahrzeug umfassend eine Kommunikationsvorrichtung ermöglicht. Dabei umfasst die Kommunikationsvorrichtung einen Sendeempfänger, der eingerichtet ist, eine Kommunikationsverbindung mit einer Bedienstelle, welche das automatisch fahrende Fahrzeug extern steuern kann, aufzubauen. Der Sendeempfänger kann dabei z.B. ausgebildet sein, eine Verbindung zu einem Mobilfunknetzwerk herzustellen, um die Kommunikationsverbindung mit der Bedienstelle aufzubauen bzw. aufrecht zu erhalten.

Ferner umfasst die Kommunikationsvorrichtung eine Eingabevorrichtung, die eingerichtet ist, Kommunikation zu empfangen, welche mittels der Kommunikationsverbindung an die Bedienstelle zu übertragen ist. Bei der Eingabevorrichtung kann es sich z.B. um ein Mikrofon, eine Tastatur oder eine berührungsempfindliche Anzeige handeln. Insbesondere kann es sich bei der Eingabevorrichtung um eine bereits im automatisch fahrenden Fahrzeug vorhandene Vorrichtung handeln (z.B. eines Infotainmentsystems oder einer Freisprecheinrichtung).

Die Kommunikationsvorrichtung umfasst weiterhin eine Ausgabevorrichtung, die eingerichtet ist, über die Kommunikationsverbindung empfangene Kommunikation von der Bedienstelle auszugeben. Bei der Eingabevorrichtung kann es sich z.B. um einen Lautsprecher oder eine Anzeige handeln. Insbesondere kann es sich bei der Eingabevorrichtung um eine bereits im automatisch fahrenden Fahrzeug vorhandene Vorrichtung handeln (z.B. eines Infotainmentsystems oder einer Freisprecheinrichtung).

Das erfindungsgemäße Fahrzeug kann eine Kommunikation mit einer Bedienstelle, welche das Fahrzeug extern steuert, ermöglichen. Derart kann ein Remote-Fahrer mit Insassen des automatisch fahrenden Fahrzeugs kommunizieren, um z.B. Informationen über die momentane Verkehrssituation zu gewinnen oder auch die Insassen über geplante Fahrmanöver zu informieren.

Ausführungsbeispiele der vorliegenden Erfindung werden nachfolgend, Bezug nehmend auf die beigefügten Figuren, näher erläutert. Es zeigen:
Fig. 1 zeigt ein Flussdiagram eines Ausführungsbeispiels eines Verfahrens zur Kommunikation zwischen einer Bedienstelle und einem weiteren Verkehrsteilnehmer;
Fig. 2 zeigt ein Beispiel einer komplexen Verkehrssituation; und
Fig. 3 zeigt ein Ausführungsbeispiel eines automatisch fahrenden Fahrzeugs umfassend eine Kommunikationsvorrichtung.

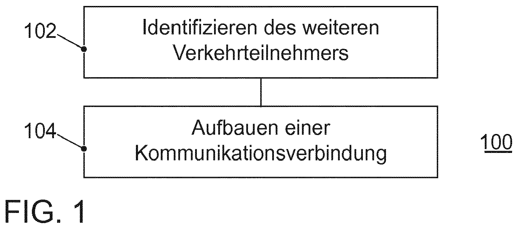

Fig. 1 zeigt ein Verfahren 100 zur Kommunikation zwischen einer Bedienstelle, welche ein automatisch fahrendes Fahrzeug extern steuert, und einem weiteren Verkehrsteilnehmer. Das Verfahren 100 umfasst ein Identifizieren 102 des weiteren Verkehrsteilnehmers sowie ein Aufbauen 104 einer Kommunikationsverbindung zwischen der Bedienstelle und dem weiteren Verkehrsteilnehmer.

Das Verfahren 100 kann z.B. eine Übertragung von Sprache von der Bedienstelle (command center) eines L4-Fahrzeugs an andere Verkehrsteilnehmer mithilfe einer lokalen Funktechnologie (z. B WLAN) ermöglichen. Dabei kann das L4-Fahrzeug als ein Art Proxy bzw. Repeater dienen. Alternativ können Kommunikationspartner mithilfe einer Mobilfunktechnologie und der Bedienstelle (welche z.B. als einer Art Vermittlungszentrale dient) miteinander verbunden werden.

Verkehrsteilnehmer können sich z.B. bei der Vermittlungszentrale für den Dienst Koordinierung mit automatischen Fahrzeugen anmelden. Der Dienst kann dabei unter anderem umfassen:
- Verwaltung angemeldeter Teilnehmer;
- Ortsbestimmung angemeldeter Teilnehmer;
- Zuordnung der Kommunikationspartner z.B. auf Basis einer Ortsbestimmung und weiterer für eine Identifizierung von einzelnen Verkehrsteilnehmern geeigneten Eigenschaften (z. B. ausgesendetes Pseudonym, mit einer Kamera erfasste Informationen wie das Kennzeichen),
- Verwaltung von sich ändernden Zuordnungsmerkmalen, wie z. B. sich ändernde Pseudonyme,
- Initiierung der Kommunikation, dabei Gewährleistung der Privacy der am Dienst angemeldeten Verkehrsteilnehmer,
- Anlegen eines Profils mit persönlichen Präferenzen (z. B. Fahrstil oder Terminkalender, um dies bei der Trajektorienwahl zu berücksichtigen) oder personenanonymen Informationen zu Fahrzeugeigenschaften oder-nutzungsgewohnheiten.

Die Kommunikation zwischen einem Remote-Fahrer in der Bedienstelle und einem anderen Verkehrsteilnehmer kann vom Remote-Fahrer oder aber auch von dem anderen Verkehrsteilnehmer initiiert werden. Der andere Verkehrsteilnehmer kann allgemein der Fahrer eines Fahrzeugs sein (z.B. PKW, LKW, Nutzfahrzeug, Zweirad, Straßenbahn, Einsatzfahrzeug usw.) oder auch ein Fußgänger sowie eine Person, welche den Verkehr regelt.

Wie oben angedeutet, kann die Identifikation der (benötigten) lokaler Kooperationspartner mit Hilfe einer lokalen Funktechnologie, z. B. unter Verwendung dort benutzter Pseudonyme, erfolgen.

Sprachkommunikation zwischen einem Verkehrsteilnehmer und der Bedienstelle kann z.B. über Mobilfunk oder alternativ mithilfe einer lokalen Funktechnologie (z. B WLAN) initiiert werden. Die Adressierung kann beispielsweise mithilfe von Pseudonymen erfolgen. Auch kann der Aufbau eines virtuellen privaten Netzwerks (VPN) zur Gewährleistung der Privacy umfasst sein.

Bei einem zentralenseitigen Ansatz und Nutzung eines mobilen Endgeräts des Nutzers kann eine Zuordnung des Nutzers zum Fahrzeug nötig sein. Bei mehreren mobilen Endgeräten mit eingeschaltetem Dienst im Fahrzeug (z.B. mobiles Endgerät des Fahrers und mobile Endgeräte anderer Passagiere) erfolgt beispielsweise eine automatische Zuordnung des Fahrer-Mobilgerätes respektive des Mobilgerätes des fahrtverantwortlichen Fahrzeuginsassen (da von einem Fahrer im klassischen Sinne eigentlich nicht gesprochen werden kann). Hierzu können beispielsweise Rollen vergeben werden (z.B. durch eine Software bzw. Applikation im mobilen Endgerät), welche ein mobiles Endgerät stellvertretend für seinen Nutzer einnehmen kann. Beispielsweise kann ein mobiles Endgerät die Rolle eines Fahrers eines Fahrzeugs vom Typ XY (z.B. PKW, LKW, Bus, motorisiertes Zweirad, unmotorisiertes Zweirad, Passagier eines Fahrzeugs, Fußgänger) übernehmen. Die aktuellen Rollen der mobilen Endgeräte können an die Bedienstelle übermittelt werden, welch die Verwaltung der Rollen übernimmt.

Bei z.B. mehreren beteiligten L4-Fahrzeugen kann eine Übertragung von Sprache von der Bedienstelle eines L4-Fahrzeugs an die der Bedienstelle des anderen L4-Fahrzeugs erfolgen gemäß Verfahren 100. Die Kommunikation kann direkt zwischen den Bedienstellen stattfinden oder indirekt unter Verwendung einer lokalen Funkkommunikation zwischen den L4-Fahrzeugen, die dabei als eine Art Proxy dienen.

Ferner kann das Verfahren 100 die Bereitstellung von Sensorinformationen (z. B. Videobild) an einen Remote-Fahrer in der Bedienstelle umfassen. Beispielsweise stellt ein Verkehrsteilnehmer während seiner Kommunikation mit dem Remote-Fahrer diesem Videobilder oder andere Umfeldinformationen zur Verfügung, damit dieser die Situation besser beurteilen kann. Die Erfassung kann z.B. mit bordeigener Sensorik oder Sensorik eines mobilen Endgerätes (z.B. Kamera des Smartphones) erfolgen. Zudem besteht die Möglichkeit auf Informationen von straßenperipherer Infrastruktur wie z. B. ITS Road Side Stations (IRS) zurückzugreifen, welche beispielsweise von einer zuständigen Verkehrsmanagementzentrale bereitgestellt werden können.

Ebenso kann das Verfahren 100 eine Übertragung von von der Bedienstelle eines L4-Fahrzeugs geplanter Trajektorien/Manöver an andere Verkehrsteilnehmer umfassen. Hierzu können die oben beschriebenen Kommunikationswege (lokaler oder zentraler Ansatz) verwendet werden.

Ebenso kann das Verfahren ferner eine Übertragung von von der Bedienstelle eines L4-Fahrzeugs geplanter Trajektorien/Manöver an eine Bedienstelle eines anderen L4-Fahrzeugs umfassen. Die Kommunikation kann direkt zwischen den Bedienstellen stattfinden oder mittels einer lokalen Funkkommunikation zwischen den L4-Fahrzeugen, die dabei als eine Art Proxy dienen.

Weitere Details und Aspekte des Verfahrens 100 sind vorangehend in Zusammenhang mit einem oder mehreren Ausführungsbeispielen beschrieben. Das Verfahren 100 kann eines oder mehrere optionale Merkmale gemäß einem oder mehreren der vorbeschriebenen Ausführungsbeispiele umfassen.

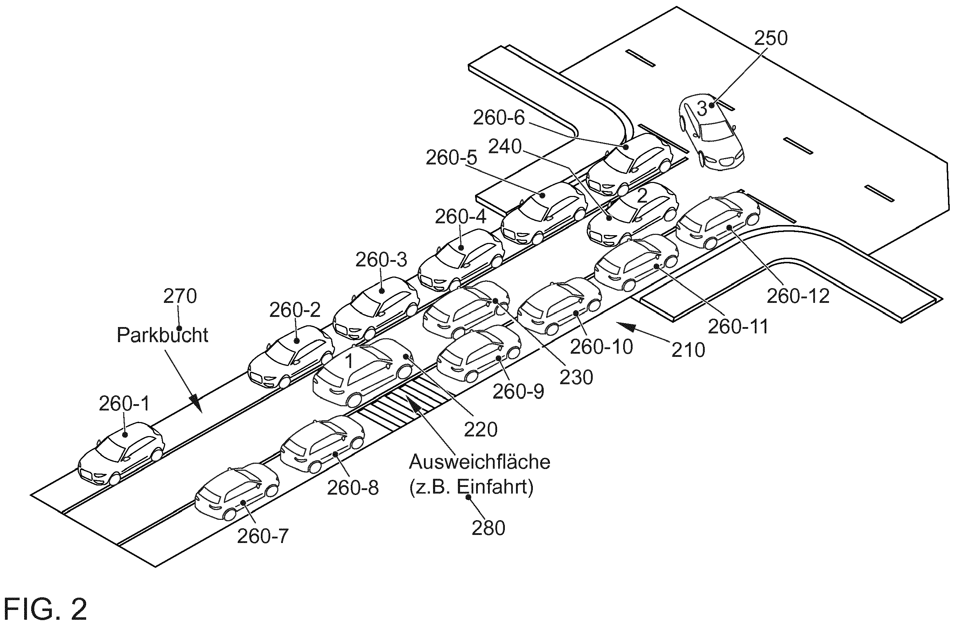

Im Folgenden zeigt Fig. 2 ein Beispiel einer komplexen Verkehrssituation 200, welche mit dem erfindungsgemäßen Verfahren aufgelöst werden kann. Fig. 2 zeigt eine enge Straße 210 mit Begegnungsverkehr. Dort hat sich eine Situation aufgebaut, die mindestens eine Koordinierung der vier Fahrzeuge 220, 230, 240 und 250 für das Ausweichen- und Passieren-Lassen erfordert. Eine solche Koordination der Fahrzeuge 220, 230, 240 und 250 kann z.B. ein Eingreifen eines Remote-Fahrers einer Bedienstelle erfordern, wenn nicht alle Fahrzeuge hochautomatisiert (d.h. SAE-Level 4 oder höher) sind.

In der komplexen Verkehrssituation 200 ist nur das Fahrzeug 230 hochautomatisiert (z.B. gemäß SAE-Level 4, d.h. ohne menschlichen Fahrer) und über eine Bedienstelle fernsteuerbar. Die weiteren Fahrzeuge 220, 240 und 250 sind Fahrzeuge mit niedrigem Automatisierungsgrad oder ohne Automatisierung (z.B. SAE-Level 3 oder niedriger). Die Fahrzeuge 260-1, ..., 260-12 sind nicht beteiligt, da sie z.B. am Straßenrand parken.

Um die komplexe Verkehrssituation 200 aufzulösen, kann z.B. das Fahrzeug 220 zunächst rückwärts in die Parkbucht 270 fahren. Im Weiteren kann das L4-Fahrzeug 230 rückwärts auf die Ausweichfläche 280, welche z. B. durch eine Grundstückseinfahrt gebildet sein kann, fahren. Die beiden Fahrzeuge 240 und 250, welche in die enge Straße 210 eingebogen sind, können dann passieren. Anschließend kann das L4-Fahrzeug 230 die Ausweichfläche 280 verlassen und seine Fahrt fortsetzen. Ebenso kann das Fahrzeug 200 die Parkbucht 270 verlassen und seine Fahrt fortsetzen.

Um die komplexe Verkehrssituation 200 wie vorstehend beschrieben auflösen zu können, muss der Remote-Fahrer des L4-Fahrzeugs 230 (wahrscheinlich) Manöver mit den Fahrern der anderen Fahrzeug abstimmen (z. B. zur Durchführung der oben beschriebenen Schritte).

Dazu muss der Remote-Fahrer von der Bedienstelle aus mit den Fahrern der manuell gesteuerten Fahrzeuge 220, 240 und 250 in Kontakt treten. Dies erfordert einen Kommunikationskanal, um Sprache oder kooperative Nachrichten (Intention, Request, Accept, Sensorinformationen wie Video-Bilder) zu übermitteln. Das erfindungsgemäß Verfahren kann dies gemäß Ausführungsbeispielen ermöglichen. Eine Kommunikation kann beispielsweise dezentral mittels eines Ad-Hoc-Netzwerkes (WLAN) zwischen den Fahrzeugen stattfinden oder zentral gesteuert über eine Mobilfunktechnologie.

Der Remote-Fahrer muss sich dabei aber nicht zwangsläufig in der Bedienstelle befinden und kann sich beispielsweise auch vor Ort in der Nähe des automatisch fahrenden Fahrzeugs befinden. Beispielsweise kann ein Polizist (oder auch ein Feuerwehrmann) unter Einbeziehung der Bedienstelle(n) über lokale Kommunikation das L4-Fahrzeug steuern und auch L4-Fahrzeuge als Proxy nutzen.

Eine Kontaktaufnahme könnte auch von einem der betroffenen Verkehrseilnehmer initiiert werden.

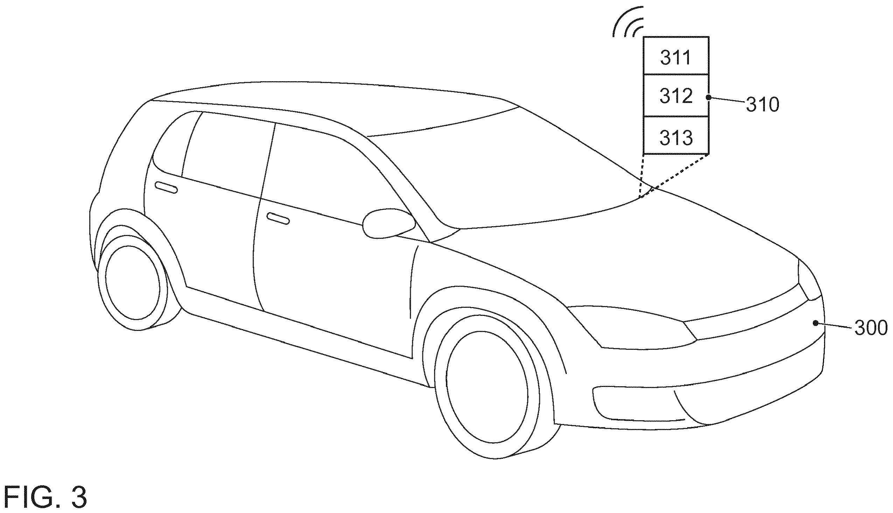

Fig. 3 zeigt ferner noch ein automatisch fahrendes Fahrzeug 300 umfassend eine Kommunikationsvorrichtung 310. Die Kommunikationsvorrichtung 310 umfasst einen Sendeempfänger 311, der eine Kommunikationsverbindung mit einer Bedienstelle, welche das automatisch fahrende Fahrzeug 300 extern steuern kann, aufbaut. Der Sendeempfänger 311 kann dabei z.B. ausgebildet sein, eine Verbindung zu einem Mobilfunknetzwerk herzustellen, um die Kommunikationsverbindung mit der Bedienstelle aufzubauen bzw. aufrecht zu erhalten.

Ferner umfasst die Kommunikationsvorrichtung 310 eine Eingabevorrichtung 312, die Kommunikation empfängt, welche mittels der Kommunikationsverbindung an die Bedienstelle zu übertragen ist. Die Eingabevorrichtung 312 kann z.B. ein Mikrofon, eine Tastatur oder eine berührungsempfindliche Anzeige sein. Insbesondere kann eine bereits im Fahrzeug 300 vorhandene Eingabevorrichtung (z.B. eines Infotainmentsystems oder einer Freisprecheinrichtung) genutzt werden.

Die Kommunikationsvorrichtung 310 umfasst weiterhin eine Ausgabevorrichtung 313, die über die Kommunikationsverbindung empfangene Kommunikation von der Bedienstelle ausgibt. Die Ausgabevorrichtung 313 kann z.B. ein Lautsprecher oder eine Anzeige des Fahrzeugs 300 sein. Insbesondere kann wiederum eine bereits im Fahrzeug 300 vorhandene Ausgabevorrichtung (z.B. eines Infotainmentsystems oder einer Freisprecheinrichtung) genutzt werden.

Das erfindungsgemäße Fahrzeug 300 kann eine Kommunikation mit einer Bedienstelle, welche das Fahrzeug 300 extern steuert bzw. steuern kann, ermöglichen. Derart kann ein Remote-Fahrer mit Insassen des automatisch fahrenden Fahrzeugs 300 kommunizieren.

Beispielsweise kann die Kommunikationsvorrichtung 310 eine Kommunikationseinrichtung an einem L4-Fahrzeug mit einem Bedienfeld, einem Mikrofon und einem Lautsprecher zur Kommunikation von Personen mit der Bedienstelle bzw. dem dort befindlichen Remote-Fahrer sein.

Weitere Details und Aspekte des automatisch fahrenden Fahrzeugs 300 sind vorangehend in Zusammenhang mit einem oder mehreren Ausführungsbeispielen beschrieben. Das automatisch fahrende Fahrzeug 300 kann eines oder mehrere optionale Merkmale gemäß einem oder mehreren der vorbeschriebenen Ausführungsbeispiele umfassen.

### Bezugszeichenliste

- 100: Verfahren zur Kommunikation zwischen einer Bedienstelle und einem weiteren Verkehrsteilnehmer
- 102: Identifizieren des weiteren Verkehrsteilnehmers
- 104: Aufbauen einer Kommunikationsverbindung
- 200: komplexe Verkehrssituation
- 210: enge Straße
- 220: Fahrzeug
- 230: Fahrzeug
- 240: Fahrzeug
- 250: Fahrzeug
- 260-1, ..., 260-12: Fahrzeuge
- 270: Parkbucht
- 280: Ausweichfläche
- 300: Fahrzeug
- 310: Kommunikationsvorrichtung
- 311: Sendeempfänger
- 312: Eingabevorrichtung
- 313: Ausgabevorrichtung

## Patentansprüche

1. Verfahren (100) zur Kommunikation zwischen einer Bedienstelle, welche ein automatisch fahrendes Fahrzeug extern steuert, und einem weiteren Verkehrsteilnehmer, umfassend:
Identifizieren (102) des weiteren Verkehrsteilnehmers; und
Aufbauen (104) einer Kommunikationsverbindung zwischen der Bedienstelle und dem weiteren Verkehrsteilnehmer.

2. Verfahren nach Anspruch 1, wobei das Identifizieren (102) des weiteren Verkehrsteilnehmers auf empfangenen Positionsinformationen des weiteren Verkehrsteilnehmers und/oder Messwerten eines Sensors des automatisch fahrenden Fahrzeugs und/oder von dem weiteren Verkehrsteilnehmer ausgesendeten Identifikationsinformationen beruht.

3. Verfahren nach einem der vorhergehenden Ansprüche, wobei das Verfahren ferner ein Übertragen eines Messwerts eines Sensors des weiteren Verkehrsteilnehmers über die Kommunikationsverbindung an die Bedienstelle umfasst.

4. Verfahren nach einem der vorhergehenden Ansprüche, wobei das Verfahren ferner ein Übertragen von Informationen über eine geplante Fahrtrajektorie und/oder ein geplantes Fahrmanöver des automatisch fahrenden Fahrzeugs über die Kommunikationsverbindung an den weiteren Verkehrsteilnehmer umfasst.

5. Verfahren nach einem der vorhergehenden Ansprüche, wobei der weitere Verkehrsteilnehmer ein zweites automatisch fahrendes Fahrzeug ist, und wobei das Aufbauen der Kommunikationsverbindung zwischen der Bedienstelle und dem weiteren Verkehrsteilnehmer ein Aufbauen einer Kommunikationsverbindung zwischen der Bedienstelle, welche das automatisch fahrende Fahrzeug extern steuert, und einer zweiten Bedienstelle, welche das zweite automatisch fahrende Fahrzeug extern steuert, ist.

6. Verfahren nach Anspruch 5, wobei das Verfahren ferner ein Übertragen von Informationen über eine geplante Fahrtrajektorie und/oder ein geplantes Fahrmanöver des automatisch fahrenden Fahrzeugs über die Kommunikationsverbindung an die zweite Bedienstelle umfasst, oder wobei das Verfahren ferner ein Übertragen von Informationen über eine geplante Fahrtrajektorie und/oder ein geplantes Fahrmanöver des zweiten automatisch fahrenden Fahrzeugs über die Kommunikationsverbindung an die Bedienstelle umfasst.

7. Verfahren nach einem der vorhergehenden Ansprüche, wobei die Kommunikationsverbindung zwischen der Bedienstelle und dem weiteren Verkehrsteilnehmer über ein Mobilfunknetzwerk erfolgt.

8. Verfahren nach einem der vorhergehenden Ansprüche, wobei die Kommunikationsverbindung zwischen der Bedienstelle und dem weiteren Verkehrsteilnehmer eine lokale Funkverbindung zwischen dem automatisch fahrenden Fahrzeug und dem weiteren Verkehrsteilnehmer umfasst.

9. Verfahren nach einem der vorhergehenden Ansprüche, wobei die Identität des weiteren Verkehrsteilnehmers einem menschlichen Bediener, der das automatisch fahrende Fahrzeug in der Bedienstelle extern steuert, nicht mitgeteilt wird.

10. Automatisch fahrendes Fahrzeug (300) umfassend eine Kommunikationsvorrichtung (310), wobei die Kommunikationsvorrichtung (310) Folgendes umfasst:
einen Sendeempfänger (311), der eingerichtet ist, eine Kommunikationsverbindung mit einer Bedienstelle, welche das automatisch fahrende Fahrzeug extern steuern kann, aufzubauen;
eine Eingabevorrichtung (312), die eingerichtet ist, Kommunikation zu empfangen, welche mittels der Kommunikationsverbindung an die Bedienstelle zu übertragen ist; und
eine Ausgabevorrichtung (313), die eingerichtet ist, über die Kommunikationsverbindung empfangene Kommunikation von der Bedienstelle auszugeben.
